# EUROPÄISCHE PATENTSCHRIFT

(11) **EP 1 059 188 B1**
(45) Veröffentlichungstag und Bekanntmachung des Hinweises auf die Patenterteilung: **17.05.2006**
(21) Anmeldenummer: 00111759.7
(22) Anmeldetag: 03.06.2000
(51) Int. Cl.: B60K 37/06

(54) **Bedienelement für eine Vielzahl von Kraftfahrzeug- Funktionen**
Operating element for multiple motor vehicle functions
Elément de commande pour des fonctions multiples d'un véhicule automobile

(30) Priorität: 11.06.1999 DE 19926651
(43) Veröffentlichungstag der Anmeldung: 13.12.2000
(73) Patentinhaber: ADAM OPEL AG, 65423 Rüsselsheim (DE)
(72) Erfinder: Jordan, Frank, Dipl.-Physiker, 65428 Rüsselsheim (DE); Weber, Volker, Dipl.-Ing.(FH), 55437 Appenheim (DE)
(74) Vertreter: Daniel, Ulrich W.P.

(56) Entgegenhaltungen:
- EP-A- 0 701 926
- EP-A- 0 893 750
- EP-A- 0 898 003
- EP-A- 0 901 262
- WO-A-99/27435
- DE-U- 29 604 717
- US-A- 5 270 689
- US-A- 5 883 346

## Beschreibung

Die Erfindung bezieht sich auf einen Geber mit den im Oberbegriff des Patentanspruchs 1 angegebenen Merkmalen, wie er aus DE 38 21 004 bekannt ist. Mittels eines solchen Gebers soll die Einhandbedienung von vielen Kfz-Funktionen möglich sein, wobei die Vermeidung einer sonst notwendigen Vielzahl von Bedienelementen als Vorteil anzusehen ist. Durch wahlweise bidirektionales Drehen am Geber sind Kfz-Funktionen/Menus vorwählbar, und durch axialen Druck oder Zug ist diese Funktion dann anwählbar. Dies ist sehr komfortabel, wobei es nach DE 38 21 004 (Verweis auf DE 37 31 784) auch noch zusätzlich möglich ist, das Drehmomentenverhalten des Gebers entsprechend den Anforderungen zu gestalten (Raststellungen, Schwungradverhalten ...).

Nachteilig dabei ist, daß alle Funktionen/Menus über nur den einen Geber zu betätigen sind und dabei zwangsweise auch relativ oft benötigte Funktionen in einer tiefen Menuebene "versteckt" sind. Damit wird die Initialisierung dieser Funktion aufwendig, wie dies auch beispielsweise aus DE 38 36 555 A1 hervorgeht.

[0002a] US 5,883,346 A beschreibt einen Geber für Kraftfahrzeuge, der nicht nur durch Drehen sowie durch axialen Druck/Zug bedienbar, sondern der zusätzlich auch noch verschwenkbar ist. Somit nehmen die Möglichkeiten der direkten Bedienung zu, jedoch ist ein solcher Geber aufwendiger herzustellen.

Es ist Aufgabe der Erfindung, einen Geber der genannten Art zu schaffen, bei dem unter Beibehaltung der Vorteile bekannter Geber zumindest eine Kfz-Funktion direkt ohne Notwendigkeit der Suche im Menu ansteuerbar ist.

Zur Lösung dieser Aufgabe zeichnet sich der Geber durch die im Patentanspruch 1 angegebenen Merkmale aus. Befindet sich der vom Geber angesteuerte Mikrocomputer in einer Start- oder Ruhephase, dient der Geber zur direkten Ansteuerung einer Kfz-Funktion, was insbesondere durch Drehen an dem Geber erfolgen kann. Durch axialen Druck auf den Geber oder axialen Zug an dem Geber wird der Computer aus der Ruhephase "geweckt" und gleichzeitig ein Programm gestartet, das die bekannte Funktion des Gebers zur Wirkung bringt. Dann ist durch Drehen eine Funktions-/Menuauswahl möglich und die genannte spezielle Kfz-Funktion ist nicht mehr unmittelbar direkt ansteuerbar.

Es können mehrere erfindungsgemäße Geber im Fahrzeug angeordnet sein, und diese können auf einen oder mehrere Mikrocomputer wirken. Dann sollte maximal ein Geber in der aktiven Phase sein und mit allen anderen Gebern könnte direkt eine Kfz-Funktion ansteuerbar sein, da sich der zugehörige Computer in einer Start-/Ruhephase befindet. Diese Phase wird erreicht, wenn ein Motorstart erfolgt, wenn der jeweilige Geber über eine festgelegte Zeitspanne nicht bedient wird, oder wenn ein anderer Geber für eine Menusteuerung aktiviert wird.

Ein Geber könnte so zur Steuerung einer Heizungs-/Belüftungs-/Klimaanlage des Fahrzeugs dienen. Durch axialen Druck/Zug wird ein entsprechendes Menu aktiviert, in dem dann mittels des Gebers gearbeitet werden kann. Ist diese Steuerung jedoch inaktiv, kann durch Drehen am Geber beispielsweise eine Gebläsedrehzahl eines Lüfters verändert werden, womit eine relativ oft benötigte Funktion besonders vorteilhaft zu beeinflussen ist. Eine Menuaktivierung ist nicht erforderlich, und die Verkehrssicherheit ist damit in besonderem Maße gewährleistet, da keine unnötige Ablenkung des Fahrers erfolgt. Da oft für diverse Kfz-Funktionen und -Computer nur ein gemeinsamer Bildschirm vorgesehen ist, auf dem alle einzelnen Menus wahlweise dargestellt werden, muß wegen des Wunsches der Gebläsedrehzahlverstellung auch nicht ein gerade aktives anderes Menu (beispielsweise Navigation) unterbrochen werden.

Mittels eines Gebers könnte eine Audioanlage, ein Navigationssystem und/oder ein Autotelefon steuerbar sein, wobei bei entsprechender Start-/Ruhephase zugehöriger Computer an dem Geber jeweils die Lautstärke des Systems einstellbar sein könnte. Auch die Steuerung eines Bordcomputers mit einem solchen Geber ist möglich. Dann könnten als direkt ansteuerbare Kfz-Funktion beispielsweise Bildschirmeinstellungen verändert werden.

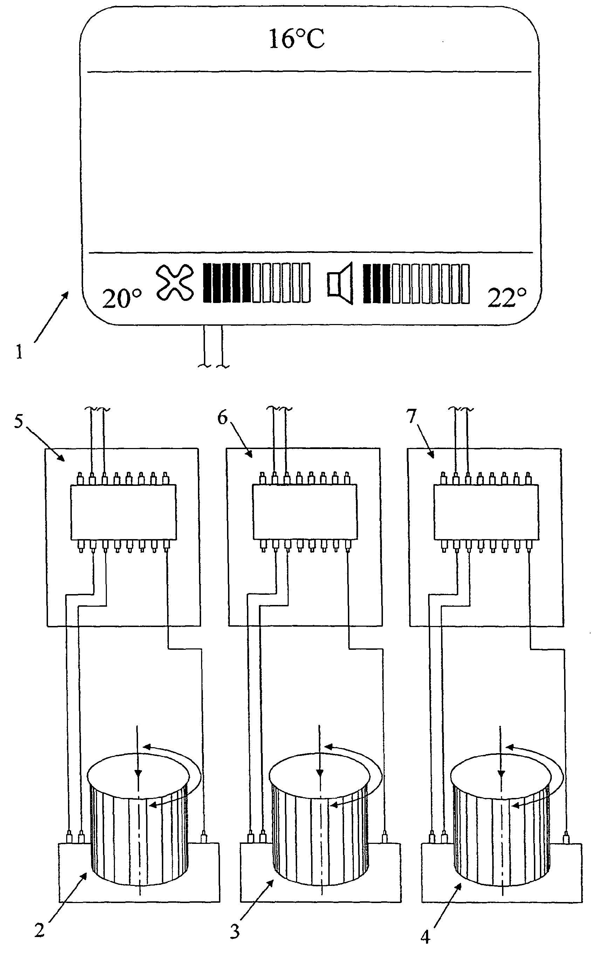

Details der Erfindung werden im Folgenden anhand einer in der einzigen Figur gezeigten schematischen Darstellung von zu steuernden Kfz-Baugruppen erläutert.

In einem Kraftfahrzeuginnenraum ist ein Bildschirm 1 zentral gut einsehbar angeordnet. Des weiteren sind in diesem Beispiel drei durch Drehen und axialen Druck zu betätigende Geber 2, 3, 4 vorgesehen, die in elektrischer Verbindung mit jeweils einem Mikrocomputer 5, 6, 7 stehen. Dabei könnte es sich aber auch um einen zentralen Computer handeln. Mittels des Mikrocomputers 5 wird eine Heizungs-/Belüftungs-/Klimaanlage des Fahrzeugs gesteuert. Der Computer 6 ist zur Steuerung eines Navigationssystems, eines Telefons sowie einer Audioanlage vorgesehen, und mittels des Computers 7 werden Bordcomputerfunktionen realisiert.

Nach einem Fahrzeugstart befindet sich auch die gesamte Anlage in einer Startphase. Am Bildschirm 1 werden allgemeine Fahrzeugeinstellungen, -kennwerte oder Betriebsbedingungen dargestellt. In einer Kopf- und Fußzeile sind beispielsweise die Außentemperatur, die Temperatursollwerte, eine Lüfterdrehzahl und eine eingestellte Lautstärke für auszugebende Tonsignale verdeutlicht. Dort und im Zentrum des Bildschirms 1 können weitere Werte angezeigt werden. Alle Mikrocomputer 5, 6, 7 befinden sich somit in einer Ruhephase, die sich insbesondere auf deren Bedienbarkeit bezieht. Sie können jedoch trotzdem im Hintergrund in einer jeweils vorgegebene Weise aktiv sein. Beispielsweise kann der Computer 6 aktiv die Innenraumtemperatur steuern.

In dieser Phase ist durch Drehen am Geber 2 direkt die Lüfterdrehzahl eines Gebläses der Heizungs-/Belüftungs-/Klimaanlage zu beeinflussen. Am Geber 3 kann durch Drehen unmittelbar die Lautstärke der Navigationssprachausgabe, der Telefonsprachausgabe bzw. der Audiowiedergabe eingestellt werden. Durch Drehen am Geber 4 kann unmittelbar die Helligkeit oder der Kontrast des Bildschirms 1 verändert werden.

Wird einer der Geber 2, 3, 4 durch axialen Druck (auch Zug ist möglich) aktiviert und die Start-/Ruhephase damit beendet, erfolgt die Funktion dieses einen Gebers 2, 3, 4 danach in bekannter Weise. Durch Drehen an diesem Geber 2, 3, 4 wird nicht mehr die genannte Fahrzeugfunktion direkt gesteuert, sondern jetzt ist durch Drehen eine Funktions-/Menuauswahl möglich. Nach Druck auf den Geber 2, 3, 4 wird eine Menuseite auf dem Bildschirm 1 aktiviert, innerhalb derer dann gearbeitet werden kann. Bei Druck auf den Geber 2 wird also eine Klimamenuseite aktiviert, bei Druck auf den Geber 3 eine Menuseite für Navigation, Telefon und Audio und bei Druck auf den Geber 4 eine Bordcomputer-Menuseite. Die jeweils nicht durch Druck aktivierten Geber 2, 3, 4 befinden sich weiterhin in der Ruhephase. Befindet sich ein Geber 2, 3, 4 mit Mikrocomputer 5, 6, 7 in der aktiven Phase, wobei entsprechende Menuseiten dargestellt werden, kann diese aktive Phase auf verschiedene Weise automatisch beendet werden:
- bei Abstellen des Fahrzeugmotors,
- bei Nichtbetätigen des Gebers 2, 3, 4 über eine bestimmte festgelegte Zeitspanne,
- bei Druckbetätigen eines anderen Gebers 2, 3, 4.

Es ist also immer gewährleistet, daß am Geber 2, 3, 4 genau dann eine wichtige Fahrzeugfunktion direkt steuerbar ist, wenn der Geber 2, 3, 4 nicht für Menusteuerungen benötigt wird. Damit werden ohne Kostenmehraufwand für zusätzliche Schalter wesentliche Vorteile bei der Bedienbarkeit der Anlage erreicht, was auch der Verkehrssicherheit zuträglich ist.

## Patentansprüche

1. Durch Drehen und durch axialen Druck und/oder Zug zu betätigender Geber (2, 3, 4) für Kraftfahrzeuge, der zur Bedienung zumindest eines im Fahrzeug angeordneten Mikrocomputers (5, 6, 7) dient, wobei durch Drehbewegung eine Funktions-/Menuauswahl erfolgt und durch axialen Druck oder Zug die Ausführung der eingestellten Funktion zu veranlassen ist, **dadurch gekennzeichnet, daß** der Geber (2, 3, 4) in einer Start- und/oder Ruhephase des Mikrocomputers zur direkten Ansteuerung einer Kfz-Funktion dient, wobei die direkte Ansteuerung der Kfz-Funktion durch Drehen am Geber (2, 3, 4) vorzunehmen ist und sich der Mikrocomputer (5, 6, 7) nach einem Motorstart in der Startphase befindet und nach einer festgelegten Zeit innerhalb derer keine Bedienung eines Gebers (2, 3, 4) erfolgt, in die Ruhephase verfällt.

2. Geber (2, 3, 4) für Kraftfahrzeuge nach Anspruch 1, **dadurch gekennzeichnet, daß** der Mikrocomputer (5, 6, 7) durch Druck oder Zug am Geber (2, 3, 4) aus der Start- und/oder Ruhephase weckbar ist und gleichzeitig eine Umprogrammierung des Gebers (2, 3, 4) stattfindet, derart, daß durch Drehen dann nicht mehr zwangsweise die Kfz-Funktion direkt ansteuerbar ist, sondern die Funktions-/Menuauswahl möglich ist.

3. Geber (2, 3, 4) für Kraftfahrzeuge nach Anspruch 1 oder 2, **dadurch gekennzeichnet, daß** der Mikrocomputer (5, 6, 7) zur Steuerung mehrerer Fahrzeugbaugruppen dient und über mehrere Geber bedienbar ist, wobei sich der Mikrocomputer (2, 3, 4) immer bezüglich aller nicht zuletzt durch Druck/Zug bedienten Geber (2, 3, 4) in der Ruhephase befindet.

4. Geber für Kraftfahrzeuge nach einem der Ansprüche 1 - 3, **dadurch gekennzeichnet, daß** mittels des Gebers (2) eine Heizungs-/Belüftungs-/Klimaanlage des Kraftfahrzeugs steuerbar ist und die direkt ansteuerbare Kfz-Funktion die Drehzahl eines Gebläses dieser Anlage ist.

5. Geber nach einem der Ansprüche 1 - 3, **dadurch gekennzeichnet, daß** mittels des Gebers (3) eine Audioanlage steuerbar ist und die direkt ansteuerbare Kfz-Funktion die Lautstärke der Audioanlage ist.

6. Geber nach einem der Ansprüche 1 - 3, **dadurch gekennzeichnet, daß** mittels des Gebers (3) ein Navigationssystem steuerbar ist und die direkt ansteuerbare Funktion die Lautstärke der Sprachausgabe ist.

7. Geber nach einem der Ansprüche 1 - 3, **dadurch gekennzeichnet, daß** mittels des Gebers (3) ein Autotelefon steuerbar ist und die direkt ansteuerbare Funktion die Lautstärke der Sprachausgabe ist.

8. Geber nach einem der Ansprüche 1 - 3, **dadurch gekennzeichnet, daß** mittels des Gebers (4) ein Bordcomputer steuerbar ist und die direkt ansteuerbare Funktion die Einstellung eines zugehörigen Bildschirms (1) betrifft.

## Claims

1. An input element (2, 3, 4) for motor vehicles which serves for controlling at least one microcomputer (5, 6, 7) arranged in the vehicle and which is operated by rotary action and by the action of pressing and/or pulling in the axial direction, wherein selection of a function/menu is effected by means of a rotary movement and the function selected is to be implemented by pressing or pulling in the axial direction, **characterized in that** the input element (2, 3, 4) serves for the direct control of a motor vehicle function when in a starting and/or a quiescent phase of the microcomputer, wherein the direct control of the motor vehicle function is to be undertaken by means of a rotary action at the input element (2, 3, 4), and the microcomputer (5, 6, 7) is in the quiescent phase after starting the engine and returns to the quiescent phase after a predefined period of time within which no actuation of the input element (2, 3, 4) has occurred.

2. An input element (2, 3, 4) for motor vehicles in accordance with Claim 1, **characterized in that** the microcomputer (5, 6, 7) is adapted to be woken from the starting and/or quiescent phase by means of a pressing or pulling action at the input element (2, 3, 4) and, at the same time, reprogramming of the input element (2, 3, 4) takes place in such a manner that the motor vehicle function is then no longer compulsory directly controllable by the rotary action but selection of the function/menu is possible.

3. An input element (2, 3, 4) for motor vehicles in accordance with Claim 1 or 2, **characterized in that** the microcomputer (5, 6, 7) serves for controlling a plurality of components in the vehicle and is operable by a plurality of input elements, wherein the microcomputer (2, 3, 4) is always in the quiescent phase with regard to all the input elements (2, 3, 4) that were not the last to be actuated by means of a pressing/pulling action.

4. An input element for motor vehicles in accordance with any of the Claims 1 - 3, **characterized in that** a heating/ventilation/air conditioning system of the motor vehicle is controllable by means of the input element (2) and the directly controllable motor vehicle function is the rotational speed of a fan in this system.

5. An input element in accordance with any of the Claims 1 - 3, **characterized in that** an audio system is controllable by means of the input element (3) and the directly controllable motor vehicle function is the volume of the audio system.

6. An input element in accordance with any of the Claims 1 - 3, **characterized in that** a navigation system is controllable by means of the input element (3) and the directly controllable function is the volume of the speech output.

7. An input element in accordance with any of the Claims 1 - 3, **characterized in that** an in-car telephone is controllable by means of the input element (3) and the directly controllable function is the volume of the speech output.

8. An input element in accordance with any of the Claims 1 - 3, **characterized in that** an on-board computer is controllable by means of the input element (4) and the directly controllable function relates to the setting of an associated screen (1).

## Revendications

1. Transmetteur (2, 3, 4) pour des véhicules automobiles, à actionner par rotation et par pression et/ou traction axiale, servant à la commande d'au moins un micro-ordinateur (5, 6, 7) disposé dans le véhicule, une sélection de fonctions/menus étant effectuée par un mouvement de rotation, et l'application de la fonction réglée étant lancée par accomplissement d'une pression ou d'une traction axiale, **caractérisé en ce que** le transmetteur (2, 3, 4), dans une phase de démarrage et/ou de repos du micro-ordinateur, sert à la commande directe d'une fonction du véhicule automobile, la commande directe de la fonction du véhicule automobile étant effectuée par rotation sur le transmetteur (2, 3, 4) et le micro-ordinateur (5, 6, 7), après un démarrage du moteur, se trouvant en phase de démarrage et, après expiration d'une durée fixée dans les limites de laquelle aucune commande d'un transmetteur (2, 3, 4) n'est effectuée, passant en position de repos.

2. Transmetteur (2, 3, 4) pour des véhicules automobiles selon la revendication 1, **caractérisé en ce que** le micro-ordinateur (5, 6, 7) peut être réveillé par accomplissement d'une pression et d'une traction sur le transmetteur (2, 3, 4) depuis la phase de démarrage et/ou de repos et, simultanément, une reprogrammation du transmetteur (2, 3, 4) est effectuée, de manière que, par une rotation, la fonction du véhicule automobile ne puisse alors plus être commandée obligatoirement directement, mais qu'au contraire soit possible une sélection de fonctions/menus.

3. Transmetteur (2, 3, 4) pour des véhicules automobiles selon la revendication 1 ou 2, **caractérisé en ce que** le micro-ordinateur (5, 6, 7) sert à la commande de plusieurs composants du véhicule et peut être commandé par plusieurs transmetteurs, le micro-ordinateur (2, 3, 4) se trouvant toujours dans la phase de repos par rapport à tous les transmetteurs (2, 3, 4) n'ayant pas fait l'objet d'une ultime commande par pression/traction.

4. Transmetteur pour des véhicules automobiles selon l'une des revendications 1 à 3, **caractérisé en ce qu'**au moyen du transmetteur (2) peut être commandée une installation de chauffage/aération/climatisation du véhicule automobile et la fonction de véhicule automobile pouvant être commandée directement est la vitesse de rotation d'une soufflante de cette installation.

5. Transmetteur selon l'une des revendications 1 à 3, **caractérisé en ce qu'**au moyen du transmetteur (3) peut être commandée une installation audio, et la fonction de véhicule automobile pouvant être commandée directement est la puissance sonore de l'installation audio.

6. Transmetteur selon l'une des revendications 1 à 3, **caractérisé en ce qu'**au moyen du transmetteur (3) peut être commandé un système de navigation, et la fonction pouvant être commandée directement est la puissance sonore de la production vocale.

7. Transmetteur selon l'une des revendications 1 à 3, **caractérisé en ce qu'**au moyen du transmetteur (3) peut être commandé un téléphone d'automobile, et la fonction pouvant être commandée directement est la puissance sonore de la production vocale.

8. Transmetteur selon l'une des revendications 1 à 3, **caractérisé en ce qu'**au moyen du transmetteur (4) peut être commandé un ordinateur de bord, et la fonction pouvant être commandée directement concerne le réglage d'un écran (1) afférent.
